(19) **Europäisches Patentamt / European Patent Office / Office européen des brevets**

(11) **EP 1 517 571 B1**

(12) **EUROPEAN PATENT SPECIFICATION**

(45) Date of publication and mention
of the grant of the patent:
**03.11.2010 Bulletin 2010/44**

(51) Int Cl.:
*H04W 24/02* (2009.01)    *H04W 24/00* (2009.01)

(21) Application number: **03021020.7**

(22) Date of filing: **17.09.2003**

(54) **Method and monitoring device for determining a measure for the quality of a network element in a mobile radio network**

Verfahren und Überwachungsvorrichtung zur Bestimmung eines Qualitätsmasses eines Netzwerkelements in einem Mobilfunknetz

Procédé et dispositif de surveillance pour déterminer le niveau de qualité d'un élément de réseau dans un réseau de téléphonie mobile

(84) Designated Contracting States:
**DE FR GB IT**

(43) Date of publication of application:
**23.03.2005 Bulletin 2005/12**

(73) Proprietor: **Tektronix International Sales GmbH 8212 Neuhausen (CH)**

(72) Inventors:
• **Barollo, Fabio**
  **35020 Tribano Padua (IT)**
• **Gallato, Andrea**
  **35132 Padua (IT)**
• **Fioravanti, Michele**
  **30033 Noale (IT)**
• **Marazzato, Daniele**
  **35010 Trebaseleghe (IT)**

(74) Representative: **Schurack, Eduard F. et al Hofstetter, Schurack & Skora Balanstrasse 57 81541 München (DE)**

(56) References cited:
**US-A1- 2003 064 722**

• **TEKTRONIX: "Optimize Revenue with NET-7 IRMA Intelligent Roaming Monitoring Application" TEKTRONIX APPLICATION NOTE, [Online] - 13 February 2003 (2003-02-13) pages 1-4, XP002269851 Retrieved from the Internet: <URL:www.tek.com/Measurement/APp_Notes/ 2F_ 16299/eng/2FW_16299_0.pdf> [retrieved on 2004-02-10]**
• **TEKTRONIX: "NET-7 Monitoring System" TEKTRONIX SYSTEM MANUAL, [Online] - 21 October 2002 (2002-10-21) pages 1-4, XP002225043 Retrieved from the Internet: <URL: www.tek.com/site/os/2F-4219/pdfs/2FW_ 14219.pdf> [retrieved on 2004-02-10]**

**Description**

The present invention refers to a method for determining a measure for the quality of a specific network element in a mobile radio network and a monitoring device designed to carry out such method.

The problem on which the present invention is based can be simply described by means of the following example:

A person flies together with his mobile phone into another country and after landing switches on his mobile phone at the airport for the first time. The person is a so-called in-roamer, i. e. a subscriber member of a network of his country of origin at the moment he is connected into the mobile radio network in the country in which he is currently staying. In this situation, several mobile radio networks of different providers of the country in which the owner of the mobile phone is currently staying compete for this in-roamer. Depending on the setting, the mobile phone chooses for example the provider with the strongest transmit signal, as long as this provider is currently available at this point in time. Normally, the owner of the mobile phone stays with this provider, unless he is not satisfied with the QoS being provided (QoS = Quality of Service). If, however, the latter shall be the case, the user may go to another provider by making the corresponding entry in his mobile phone. It is therefore the aim of the providers to supply in-roamers at the moment the mobile phone is switched on for the first time with a possibly high QoS in order to bind the user of the mobile phone to this provider during his stay in this country.

A network monitoring tool for assessing the level of QoS of GSM (Global System for Mobile Communications) networks that roamers perceive is known from Tektronix: "Optimize Revenue with NET-7 IRMA Intelligent Roaming Monitoring Application" Tektronix Application Note, [Online] - 13 February 2003, pages 1 to 4, XP002269851. IRMA (Intelligent Roaming Monitoring Application) provides measurements of the inter-working performance between the networks visited by the roamers and the home networks. IRMA activities are triggered by the data collected by NET-7 probes located at the interconnection trunks of mobile operator network. IRMA capabilities include analysis of call processing (ISUP signalling) and mobility management events (MAP signalling). NET-7 probes monitor all messages exchanged between the two networks, then NET-7 IRMA analyses both ISUP and MAP signalling, correlates these messages, and provides alarms and synthesizes written reports. However, IRMA provides information about the network as a whole rather than about a single network element.

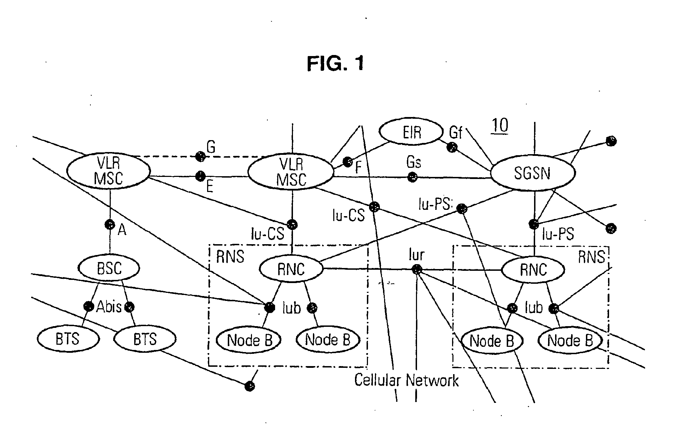

Fig. 1 shows an overview of an integrated mobile radio network 10, in which different standards are present, i.e. GSM (Global System for Mobile Communications), GPRS (General Packet Radio System) and UMTS (Universal Mobile Telecommunication System) which are linked with each other. The present invention can not only be used for mobile networks having one of these standards, but also for mobile networks of future standards that meet the specific requirements which will be explained in more detail below. For a better understanding, the invention shall be explained below by means of an example of a GSM network without limiting the scope of the invention. Thus, in a GSM network the QoS of a so-called cell is the important factor, i.e. a geographical area covered by a BTS (Base Transceiver Station) or a part of it, since a BTS can be divided into more cells. In an UMTS network this would correspond to a QoS of a geographical area, which is covered by a node B. In the example of a GSM network it is therefore the aim to provide an in-roamer with a cell having a QoS as high as possible. Up to now, however, no methods are known how this can be determined.

It is therefore the object of the present invention to provide a method for determining a measure for the quality of a specific network element in a mobile radio network. It is furthermore the object of the present invention to provide a monitoring device that is designed to carry out a method according to the invention. Furthermore, a computer program product is to be provided which implements the method according to the invention.

The above objects are solved according to the invention by a method having the features of patent claim1, by a monitoring device having the features of patent claim 7 and a computer program product having the features of patent claim 8.

Cells with a high rank value are of highest importance for providers. On the one hand, they could indicate cells that have a bad QoS value or refer to cells that, although they may have a good QoS value, are used by many in-roamers.

The present invention allows localizing the activities performed by in-roamers, detecting the area where there is the highest probability that in-roamer pass to a competitor network due to low QoS. It allows quickly discovering and improving the network portion where the churn rate of in-roamers is high. By way of an example of a GSM network, the present invention allows detecting at cell level the portion of the network providing bad service to in-roamers and assists roaming and network planning teams on discovering weak points of their network. As it is evident for the person skilled in the art, the present invention can not only be used in connection with in-roamers but can advantageously be used at all possible network elements in order to check their quality.

In another preferred embodiment the rank value RCV is proportional to the product of the quality parameter CMI and the in-roamer user parameter RUI.

Preferably, the network element represents the most outer standardized node of the mobile network. These network elements are preferred because they are positioned at the periphery as far as possible and therefore they allow checking the smallest possible components of network elements providing the information needed. In the example of a GSM network, the method is preferably used at the A-interface to process the A-interface statistic error counters related to a specific cell to implement the method according the invention. That is, the above-mentioned parameters can be detected easily at the A-interface since the initial values on which they are based are present at this interface anyway. Still further outside, the network interfaces (e.g. the A-bis interface in the GSM network) will then become proprietary and will make a simple implementation of the method according to the invention more difficult.

Preferably, the service providing parameter has at least one of the following values I1, I2, I3: Number I1 of events that indicate the abortion of a connection after assignment of a communication resource; number I2 of events that indicate the abortion of a connection before the assignment of a communication resource; number I3 of events that indicate an error with the radio resources/terrestrial resources assignment, wherein the values I1 and/or I2 are normalized on a value T1 indicating the number of events that indicate the service activities of subscribers and wherein the value I3 is normalized on a value T3 indicating the number of events that indicate assignment requests. Preferably, the mobility parameter comprises at least the following value I4: Number I4 of events that indicate a handover failure, wherein this value I4 is normalized on a value T4 indicating the number of events that indicate a request of a handover.

In an especially preferred embodiment by way of an example of a GSM network, the quality parameter CMI is calculated as follows:

$$CMI = (((I1 + I2)^*k1)/T1 + (I3^*k3)/T3 + ((I4^*k4)/T4))/(k1+k3+k4),$$

where k1, k3 and k4 are constants and at least one of them is unequal zero.

In a preferred embodiment of the invention, in predetermined timely intervals the rank parameters RCV of predeterminable network elements are calculated and analysed statistically, in particular a classification is carried out. By this measure, network elements that could be problematic can easily be detected. Hereby problems with specific network elements are immediately pointed out to the providers.

The advantages that have been described in connection with the method according to the invention as well as preferred embodiments and developments apply accordingly to the monitoring device according to the invention and the computer program product according to the invention. The monitoring comprising components to carry out the different steps of the method according to the invention.

Additional advantageous embodiments can be taken from the subclaims.

In the following, an example of the embodiment according to the invention is given by way of a detailed description, wherein reference is made to the attached drawings, in which:

Fig. 1 shows different components of an integrated mobile radio network in a schematically way; and

Fig. 2 shows the display on a display unit of a monitoring device according to the invention.

As already mentioned above, the following description will explain an embodiment of the present invention by the example of a mobile radio network according to the GSM standard, in particular by evaluating the information, which is available at the A-interface anyway (see Fig. 1, on the left). Nevertheless, as may be gathered from a person skilled in the art, the invention may be used with different standards or at different interfaces in a network according to the GSM standard.

At first, a quality parameter CMI is calculated according to the following equation, preferably on a daily basis:

$$CMI = (((I1 + I2)^*k1)/T1 + (I3^*k3)/T3 + ((I4^*k4)/T4))/(k1+k3+k4),$$

where I1 is the number of TCH Clear Requests: This counter is incremented for each Clear Request message sent from the BSC to the MSC after the assignment of a Traffic Channel. A clear request message refers to the abortion of a connection setup of a mobile phone. It indicates that the BSC wishes to release the associated dedicated resources with the consequent end of the SCCP (Signalling Connection Control Part) connection after the start of voice exchange between calling and called party. In this context, SCCP refers to a medium protocol layer. Typical causes are radio interface message failure, equipment failure, protocol error between BSC and MSC, preemption.

I2 = Number of SDDCH Clear Requests: This counter is incremented for each Clear Request message sent from the BSC to the MSC before the assignment of a Traffic Channel. It indicates that the BSC wishes to release the associated dedicated resources with the consequent end of SCCP connection before the start of voice exchange between calling and called party. Typical causes are radio interface message failure, equipment failure, protocol error between BSC and MSC, preemption.

I3 = Number of Assignment Failures: Sent from the BSC to the MSC it indicates a failure in radio resources/ terrestrial resources assignment that typically triggers the disconnection of the call and the end of SCCP connection before the start of voice exchange between calling and called party. Typical causes are radio interface message failure, equipment failure, no radio resource available, requested terrestrial resource unavailable, requested speech version unavailable.

I4 = Number of Handover Failures: Sent from the BSC to the MSC it indicates a failure in the resource allocation process on handover and that the handover has been aborted. The handover failure can trigger the disconnection of the call and the end of the SCCP connection if reversion to the old channel is not possible. Typical causes are radio interface message failure, equipment failure, no radio resource available, requested terrestrial resource unavailable, requested speech version unavailable, radio interface failure-reversion to old channel, invalid message contents. Wherein a handover indicates the change of a BTS to another BTS due to the movement of the mobile phone.

T1 = Number of paging responses plus number of CM service requests plus number of connections successfully started with handover, i.e. in principle the number of all user activities.

T3 = Number of assignment requests

T4 = Number of handover requests and handover required

k1, k3 and k4 are opportune weight values that are preferably between 1 and 100, for example at 50, and are configurable.

The quality parameter CMI provides a value that indicates bad cell working independently from the user typology, i.e. independently, whether it is referred to a home-roamer or in-roamer. A CMI near zero indicates a good cell, whereas a CMI close to 1 indicates a bad cell.

With respect to the problem of in-roamers already mentioned above, the in-roamer user parameter RUI is determined in a next step. This value indicates with daily frequency the in-roamer activity on the cells and is determined for each cell individually. Cells with a low number of activity from in-roamers will have a low RUI, cells with a high number of activity from in-roamers will have a high RUI. The in-roamer user parameter RUI will increase with the following activities: Mobile originating call, mobile terminating call, SMS receipt and transmission, periodical update location, attach update location, normal update location (normally disabled since it can produce wrong high RUI values), detach IMSI, connections successfully started with handover.

On the basis of the parameters CMI and RUI which have been determined as described above, a rank cell value RCV is subsequently determined as follows:

$$RCV = CMI * RUI$$

Preferably, a daily report with the highest RCV values will then be generated by the providers. In this report, the cells are displayed in an order according to their RCV.

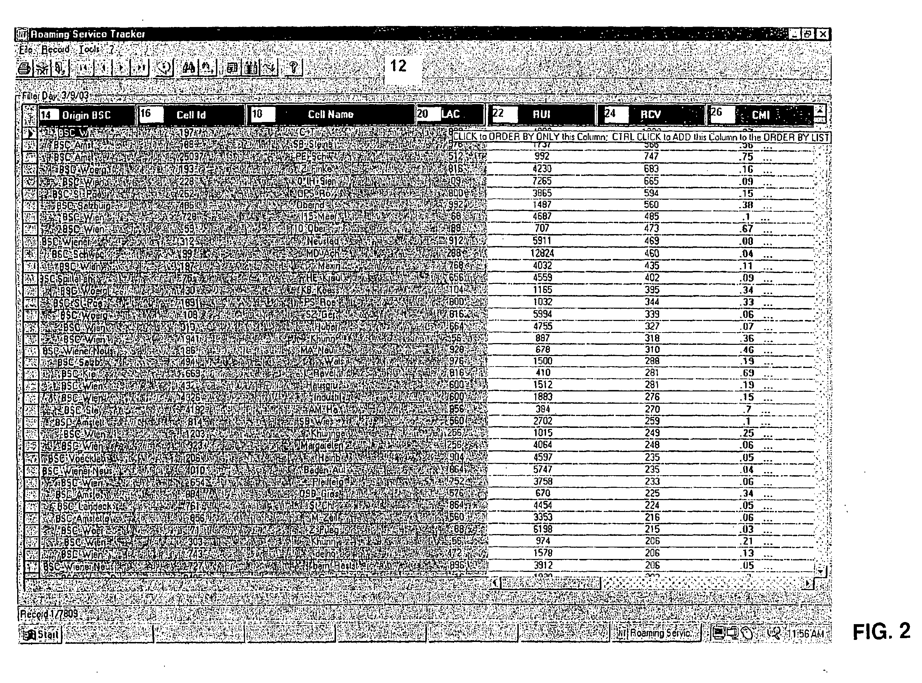

Fig. 2 shows by way of an example a display on a display unit 12 of a monitoring device according to the invention. In a first column 14, the BSC's (Base Station Controller) are listed. In a second column 16, the corresponding cells are listed (in practice also several cells could be associated to a BSC). In a third column 18, a cell name is listed. In a fourth column 20 a parameter LAC (Location Area Code) is listed. In a fifth column 22, the parameter RUI is listed. In a sixth column 24, the parameter RCV is listed and in a seventh column 26, the parameter CMI is listed.

Fig. 2 shows by way of an example a ranking of different cells arranged accordingly to the RCV listed in the sixth column 24. The second column 16 states the cell identification number. Columns 22 and 26 state the respective parameters RUI and CMI for each cell. It is also possible to order the list according to one of those two parameters. For example, from this statistic it can be taken that the cells with the Cell-ID numbers 197, 86 and 25037 have a particularly bad RCV and improvement measures are necessary in those cases.

**Claims**

1. Method for determining a measure for the quality of a specific network element in a mobile radio network, comprising the following steps
   for the specific network element:

   a) detecting a service providing parameter indicating the capability for single subscribers to use the mobile network, wherein the service providing parameter comprises at least one of the following values I1, I2, I3:

- number I1 of events that indicate the abortion of a connection after assignment of a communication resource;
- number I2 of events that indicate the abortion of a connection before the assignment of a communication resource;
- number I3 of events that indicate an error with the radio resources/terrestrial resources assignment,

wherein the values I1 and/or I2 are normalized on a value T1 indicating the number of events that indicate the service activities of subscribers and wherein the value I3 is normalized on a value T3 indicating the number of events that indicate assignment requests;

**characterised in that** the method also comprises the following steps:

b) detecting a mobility parameter indicating the capability for single subscribers to use the network during a change of location of the user accompanied by a change from a first network element to a second network element, wherein the specific network element is the first or the second network element, and wherein the mobility parameter comprises at least the following value I4: number I4 of events that indicate a handover failure, wherein this value I4 is normalized on a value T4 indicating the number of events that indicate a request of a handover;

c) linking the parameters determined in step a) and step b) for obtaining a quality parameter CMI, wherein the quality parameter CMI is calculated as follows:

$$CMI = (((I1+I2)^*k1)/T1 + (I3^*k3)/T3 + ((I4^*k4)/T4))/(k1+k3+k4),$$

where k1, k3 and k4 are constants and at least k4 is unequal zero;

d) detecting an in-roamer user parameter RUI that indicates the in-roamer activity on the specific network element, in-roamers being subscriber members of a different mobile radio network at the moment connected into the specific mobile radio network; and

e) detecting a rank value RCV for the specific network element by linking the quality parameter CMI of the specific network element with the in-roamer user parameter RUI of the specific network element.

2. The method according to claim 1,
   **characterized by** the following further step:

   g) detecting a network connection parameter indicating the availability of the mobile network, wherein in step d) this parameter also is taken into consideration.

3. The method according to claim 1 or 2,
   **characterized in that**
   the network element represents the most outer standardized node of the mobile network.

4. The method according to any of the preceding claims,
   **characterized in that**
   the rank parameter RCV is proportional to the product of the quality parameter CMI and the in-roamer user parameter RUI.

5. The method according to claim 4,
   **characterized in that**
   in predetermined timely intervals the rank parameters RCV of predeterminable network elements are calculated and analysed statistically, in particular a classification is carried out.

6. The method according to any of the preceding claims,
   **characterized in that**
   the mobile network is of the type GSM and the specific network element is a cell.

7. Monitoring device designed to carry out a method according to any of the claims 1 to 6.

8. Computer program product in which a method according to any of the claims 1 to 6 is realized.

**Patentansprüche**

1. Verfahren zum Bestimmen eines Maßes für die Qualität eines spezifischen Netzelements in einem Mobilfunknetz, mit den folgenden Schritten

   für das spezifische Netzelement:

   a) Erfassen eines Dienstbereitstellungsparameters, der die Fähigkeit für einzelne Teilnehmer angibt, das Mobilnetz zu nutzen, wobei der Dienstbereitstellungsparameter mindestens einen der folgenden Werte I1, I2, I3 umfasst:

   - die Anzahl I1 von Ereignissen, die auf den Abbruch einer Verbindung nach der Zuweisung einer Kommunikationsressource hinweisen;
   - die Anzahl I2 von Ereignissen, die auf den Abbruch einer Verbindung vor der Zuweisung einer Kommunikationsressource hinweisen;
   - die Anzahl I3 von Ereignissen, die auf einen Fehler bei der Zuweisung von Funkressourcen/terrestrischen Ressourcen hinweisen,

   wobei die Werte I1 und/oder I2 auf einen Wert T1 normiert werden, der die Anzahl von Ereignissen angibt, die auf die Dienstaktivitäten von Teilnehmern hinweisen, und wobei der Wert I3 auf einen Wert T3 normiert wird, der die Anzahl von Ereignissen angibt, die auf Zuweisungsanforderungen hinweisen; **dadurch gekennzeichnet, dass** das Verfahren auch die folgenden Schritte umfasst:
   b) Erfassen eines Mobilitätsparameters, der die Fähigkeit für einzelne Teilnehmer angibt, das Netz während eines Ortswechsels des Anwenders zu nutzen, der von einem Wechsel von einem ersten Netzelement zu einem zweiten Netzelement begleitet ist, wobei das spezifische Netzelement das erste oder das zweite Netzelement ist, und wobei der Mobilitätsparameter mindestens den folgenden Wert I4 umfasst: die Anzahl I4 von Ereignissen, die auf einen Übergabefehler hinweisen, wobei dieser Wert I4 auf einen Wert T4 normiert wird, der die Anzahl von Ereignissen angibt, die auf eine Anforderung einer Übergabe hinweisen;
   c) Verknüpfen der in Schritt a) und Schritt b) bestimmten Parameter zum Erhalten eines Qualitätsparameters CMI, wobei der Qualitätsparameter CMI folgendermaßen berechnet wird:

   $$CMI = (((I1+I2)*k1)/T1 + (I3*k3)/T3 + ((I4*k4)/T4))/(k1+k3+k4),$$

   wobei k1, k3 und k4 Konstanten sind und mindestens k4 ungleich null ist;
   d) Erfassen eines Gastteilnehmer-Anwenderparameters RUI, der die Gastteilnehmer-Aktivität auf dem spezifischen Netzelement angibt, wobei Gastteilnehmer Teilnehmermitglieder eines anderen Mobilfunknetzes in dem Moment sind, in dem sie in das spezifische Mobilfunknetz geschaltet werden;
   und
   e) Erfassen eines Rangwerts RCV für das spezifische Netzelement durch Verknüpfen des Qualitätsparameters CMI des spezifischen Netzelements mit dem Gastteilnehmer-Anwenderparameter RUI des spezifischen Netzelements.

2. Verfahren nach Anspruch 1,
   **gekennzeichnet durch** den folgenden weiteren Schritt:

   g) Erfassen eines Netzverbindungsparameters, der die Verfügbarkeit des Mobilnetzes angibt, wobei in Schritt d) auch dieser Parameter berücksichtigt wird.

3. Verfahren nach Anspruch 1 oder 2,
   **dadurch gekennzeichnet, dass**
   das Netzelement den äußersten standardisierten Knoten des Mobilnetzes darstellt.

4. Verfahren nach einem der vorangehenden Ansprüche,
   **dadurch gekennzeichnet, dass**
   der Rangparameter RCV zum Produkt des Qualitätsparameters CMI und des Gastteilnehmer-Anwenderparameters RUI proportional ist.

**5.** Verfahren nach Anspruch 4,
**dadurch gekennzeichnet, dass**
in vorbestimmten Zeitintervallen die Rangparameter RCV von vorbestimmbaren Netzelementen berechnet und statistisch analysiert werden, insbesondere eine Klassifizierung ausgeführt wird.

**6.** Verfahren nach einem der vorangehenden Ansprüche,
**dadurch gekennzeichnet, dass**
das Mobilnetz vom GSM-Typ ist und das spezifische Netzelement eine Zelle ist.

**7.** Überwachungsvorrichtung, die dazu ausgelegt ist, ein Verfahren nach einem der Ansprüche 1 bis 6 auszuführen.

**8.** Computerprogrammprodukt, in dem ein Verfahren nach einem der Ansprüche 1 bis 6 verwirklicht ist.

## Revendications

**1.** Procédé destiné à déterminer une mesure relative à la qualité d'un élément spécifique d'un réseau dans un réseau de radiocommunications mobiles, comprenant les étapes suivantes pour l'élément spécifique du réseau :

a) détecter un paramètre de fourniture de services, qui indique la capacité, pour des abonnés individuels, d'utiliser le réseau mobile, dans lequel le paramètre de fourniture de service comprend au moins l'une des valeurs I1, I2, I3, suivantes :

- le nombre I1 des évènements qui indiquent la fin anormale d'une connexion après l'affectation d'une ressource de communication ;
- le nombre I2 des évènements qui indiquent la fin anormale d'une connexion avant l'affectation d'une ressource de communication ;
- le nombre I3 des évènements qui indiquent une erreur dans l'assignation des ressources radio / des ressources terrestres,

dans lequel les valeurs I1 et / ou I2 sont normalisées sur une valeur T1, indiquant le nombre d'évènements qui indiquent les activités de service d'abonnés et dans lequel la valeur I3 est normalisée sur une valeur T3, indiquant le nombre d'évènements qui indiquent les demandes d'affectation ;
**caractérisé en ce que** le procédé comprend en outre les étapes suivantes :
b) détecter un paramètre de mobilité, qui indique la capacité, pour des abonnés individuels, d'utiliser le réseau durant un changement d'emplacement de l'utilisateur, accompagné d'un changement d'un premier élément du réseau vers un deuxième élément du réseau, dans lequel l'élément spécifique du réseau est le premier ou le deuxième élément du réseau et dans lequel le paramètre de mobilité comprend au moins la valeur I4 suivante : le nombre I4 d'événements qui indiquent un défaut de transfert, dans lequel cette valeur I4 est normalisée sur une valeur T4, indiquant le nombre d'évènements qui indiquent une demande de transfert ;
c) relier les paramètres, déterminés au cours de l'étape a) et de l'étape b), pour obtenir un paramètre de qualité CMI, dans lequel le paramètre de qualité CMI est calculé comme suit :

$$CMI = (((I1 + I2)*k1)/T1 + (I3*k3)/T3 + ((I4*k4)/T4))/(k1 + k3 + k4),$$

où k1, k3 et k4 sont des constantes et au moins k4 est différent de zéro ;
d) détecter un paramètre d'utilisateur in-roamer RUI qui indique l'activité in-roamer sur l'élément spécifique du réseau, les in-roamers étant des membres abonnés d'un réseau différent de radiocommunication mobile, connectés en ce moment au réseau spécifique de radiocommunication mobile et
e) détecter une valeur de classement RCV pour l'élément spécifique du réseau en reliant le paramètre de qualité CMI de l'élément spécifique du réseau au paramètre d'utilisateur in-roamer RUI de l'élément spécifique du réseau.

**2.** Procédé selon la revendication 1,
**caractérisé par** l'étape supplémentaire suivante :

g) détecter un paramètre de connexion de réseau qui indique la disponibilité du réseau mobile, dans lequel ce paramètre est pris en compte en outre au cours de l'étape d).

3. Procédé selon la revendication 1 ou 2,
   **caractérisé en ce que**
   l'élément du réseau représente le noeud normalisé le plus extérieur du réseau mobile.

4. Procédé selon l'une quelconque des revendications précédentes,
   **caractérisé en ce que**
   le paramètre de classement RCV est proportionnel au produit du paramètre de qualité CMI et du paramètre d'utilisateur in-roamer RUI.

5. Procédé selon la revendication 4,
   **caractérisé en ce que**,
   à des intervalles chronologiquement prédéterminés, les paramètres de classement RCV d'éléments prédéterminables du réseau sont calculés et analysés statistiquement et qu'en particulier, une classification est exécutée.

6. Procédé selon l'une quelconque des revendications précédentes,
   **caractérisé en ce que**
   le réseau mobile est de type GSM et que l'élément spécifique du réseau est une cellule.

7. Dispositif de surveillance, conçu pour exécuter un procédé selon l'une quelconque des revendications 1 à 6.

8. Produit de programme informatique, dans lequel est réalisé un procédé selon l'une quelconque des revendications 1 à 6.

# FIG. 1

EP 1 517 571 B1

10

**FIG. 2**